# EUROPÄISCHE PATENTSCHRIFT

(11) **EP 1 432 104 B1**
(45) Veröffentlichungstag und Bekanntmachung des Hinweises auf die Patenterteilung: **06.12.2006**
(21) Anmeldenummer: 03024788.6
(22) Anmeldetag: 30.10.2003
(51) Int. Cl.: H02K 21/22

(54) **Aussenläufermotor mit stehender Lagerachse**
Outer rotor motor with fixed spindle
Moteur à rotor extérieur avec support de palier fixé

(30) Priorität: 16.12.2002 DE 10258593
(43) Veröffentlichungstag der Anmeldung: 23.06.2004
(73) Patentinhaber: ebm-papst St. Georgen GmbH & Co. KG, 78112 St. Georgen (DE)
(72) Erfinder: Nickel-Jetter, Matthias, 78056 Villingen-Schwenningen (DE); Rappenecker, Hermann, 78147 Vöhrenbach (DE); Schreiner, Siegfried, 78112 St. Georgen (DE)
(74) Vertreter: Raible, Tobias

(56) Entgegenhaltungen:
- EP-A- 1 187 302
- DE-A1- 2 121 612
- DE-U1- 9 403 366
- US-A- 1 414 270
- US-A- 3 385 510
- US-A- 4 559 462
- US-A- 4 980 587
- US-A- 5 347 189
- US-A- 5 381 066
- US-A- 5 796 548
- US-E- R E35 792

## Beschreibung

Die Erfindung betrifft einen Außenläufermotor mit einem stationären Trageteil, und insbesondere einen Trommelmotor.

Aus der DE-U1-296 23 889 ist ein Trommelmotor bekannt, wie er in verschiedenen Industrien verwendet wird, z.B. zum Antrieb von Förderbändern. Dort ist das Trommelrohr an seinem ersten Ende und an seinem zweiten Ende jeweils mit einem Deckel verbunden, der sich also zusammen mit dem Trommelrohr dreht und von einem Motor im Inneren des Trommelrohres über ein Getriebe angetrieben wird. Um eine bessere Reinigung zu ermöglichen, wird auf jeden Deckel eine Kappe aus rostfreiem Stahl aufgeklebt.

Aus der US-A-5 347 189 kennt man einen Außenläufermotor zum Antrieb eines Plattenspeichers. Dieser Motor hat einen Innenstator, der auf einem stationären Trageteil angeordnet ist. Diesem Innenstator ist ein glockenförmiger Außenrotor zugeordnet, der ein Mantelteil hat, auf dessen Innenseite eine Permanentmagnetanordnung angeordnet ist, die mit dem Innenstator zusammenwirkt. Das Mantelteil ist an einer ersten Seite auf dem stationären Trageteil mittels eines ersten Wälzlagers gelagert, dessen Außenring auf der Innenseite des Mantelteils verschiebbar gelagert ist, und dessen Innenring mit dem Trageteil fest verbunden ist. Ferner ist das Mantelteil an einer zweiten Seite auf dem stationären Trageteil mittels eines zweiten Wälzlagers gelagert, dessen Außenring in der Innenseite des Mantelteils unverschiebbar befestigt ist, und dessen Innenring mit dem Trageteil fest verbunden ist.

Ferner kennt man aus der US-A-3 385 510 einen Lüfter, der von einem Miniatur-Außenläufermotor angetrieben wird. Der Lüfter ist in einem Gehäuse auf einer stationären Achse angeordnet, die an ihren Enden in Kunststoffbuchsen befestigt ist, welche Vibrationen dämpfen sollen. Auf dieser stationären Achse ist der Außenrotor, der mit Lüfterflügeln versehen ist, mittels zweier Kugellager gelagert. Die Außenringe dieser Kugellager sind durch eine Federscheibe gegeneinander verspannt, um die Lebensdauer der Kugellager zu erhöhen.

Es ist eine Aufgabe der Erfindung, einen neuen Außenläufermotor der eingangs genannten Art bereit zu stellen.

Nach der Erfindung wird diese Aufgabe gelöst durch den Gegenstand des Patentanspruchs 1. Auf diese Weise wird es bei einem Trommelmotor möglich, das Mantelteil durch den verwendeten Außenläufermotor direkt anzutreiben, wodurch sich eine einfache Bauweise und Montage ergibt und die Verwendung eines Getriebes eingespart wird. Dabei erweist sich die elektronische Kommutierung als sehr vorteilhaft, weil sie nicht nur einen Antrieb mit hohen Drehzahlen ermöglicht, sondern auch einen Antrieb mit sehr niedrigen Drehzahlen, was ein verstellbares Getriebe einspart, und weil bei einem solchen Motor die Drehzahl leicht veränderbar ist, z.B. durch Veränderung der Betriebsspannung.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel. Es zeigt:
- Fig. 1: einen Längsschnitt durch eine bevorzugte Ausführungsform eines elektronisch kommutierten Außenläufermotors nach der Erfindung, und
- Fig. 2: eine Ausschnittvergrößerung der Stelle A der Fig. 1.

In der nachfolgenden Beschreibung beziehen sich Begriffe wie "links" oder "rechts" auf die jeweilige Zeichnungsfigur.

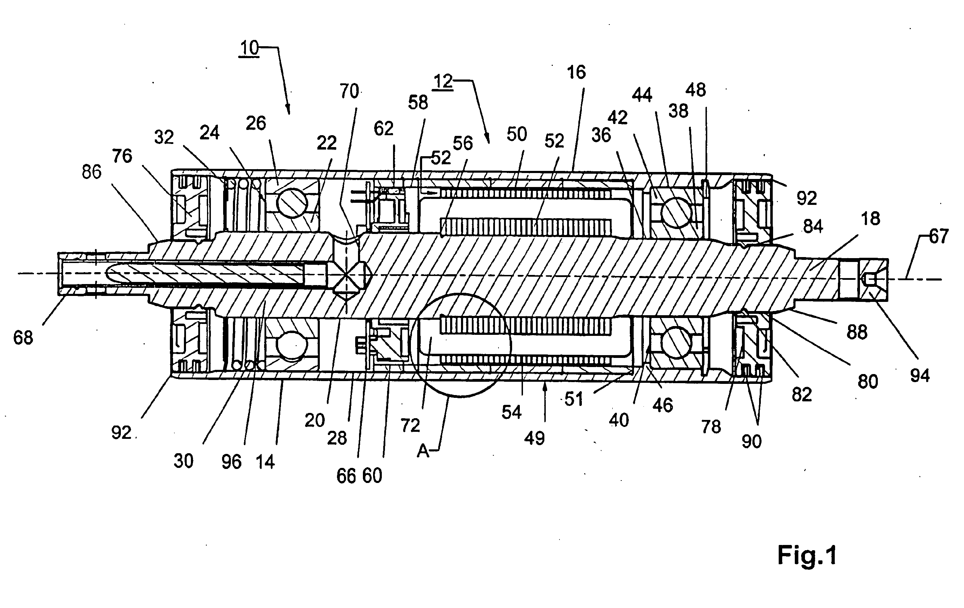

**Fig. 1** zeigt einen sogenannten Trommelmotor 10, der direkt von einem elektronisch kommutierten Außenläufermotor 12 angetrieben wird und bevorzugt zum Antrieb von Förderbändern dient. Er hat ein äußeres, rohrförmiges Mantelteil 14 aus ferromagnetischem Material, bevorzugt Stahl, das auf seiner Außenseite 16 leicht ballig ausgebildet sein kann.

Der Außenläufermotor 10 hat ein stationäres Trageteil 18, welches wegen seines Aussehens umgangssprachlich oft als "Achse" bezeichnet wird. Diese Achse 18 ist im Betrieb stationär, dreht sich also nicht.

Diese stationäre Achse 18 hat einen zylindrischen Abschnitt 20 größeren Durchmessers, auf dem der Innenring 22 eines Kugellagers 24 befestigt ist, dessen Außenring 26 in einem zylindrischen Innenbereich 28 des Mantelteils 14 verschiebbar angeordnet und in Richtung nach rechts von einer Druckfeder 30 beaufschlagt wird, deren linkes Ende an einem Krallenring 32 oder sonstigen Widerlager abgestützt ist. Ein Krallenring hat an seinem Außenumfang eine oder mehrere Krallen, welche sich bei der Montage in den zylindrischen Innenbereich 28 des Mantelteils 14 eingraben, wodurch der Krallenring 32 ein Widerlager für die Druckfeder 30 bildet, so dass letztere das Kugellager 24 verspannen kann, was zur Geräuschreduzierung beiträgt.

Ferner hat die Achse 18 einen zylindrischen Abschnitt 36 kleineren Durchmessers, auf dem der Innenring 38 eines Kugellagers 40 befestigt ist, dessen Außenring 42 in einem zylindrischen Abschnitt 44 des Mantelteils 14 angeordnet und dort nach links durch eine Schulter 46 und nach rechts durch einen Sprengring 48 gesichert ist. Die beiden Kugellager 24, 40 haben also unterschiedliche Größen, und sie lagern das Mantelteil 14 drehbar auf der Achse 18.

In der zylindrischen Innenausnehmung 28 des Mantelteils 14 sind Permanentmagnete des Außenläufermotors 12 befestigt, welche einen Außenrotor 49 definieren. Dies ist einmal die Magnetanordnung 50 des Motorteils, die sich von einer Schulter 51 nach links erstreckt und mit einem Innenstator 52 zusammenwirkt, dessen Blechpaket 54 auf die Achse 18 aufgepresst ist, welche bevorzugt ebenfalls aus ferromagnetischem Material ausgebildet ist und dadurch einen Teil des magnetischen Kreises des Innenstators 52 bildet. Die Achse 18 ist mit einer Schulter 56 versehen, welche die Lage des Blechpaketes 54 festlegt.

An die Permanentmagnetanordnung 50 schließt sich links ein unmagnetischer Distanzring 58 an, z.B. aus Messing, und auf diesen folgt links ein Magnetring 60, der zur Steuerung eines oder mehrerer galvanomagnetischer Sensoren 62 dient, z.B. zur Steuerung von (nicht dargestellten) Hallgeneratoren. Die Sensoren 62 haben die Funktion, die Drehstellung des Mantelteils 14 relativ zur stationären Achse 18 zu erfassen, was besonders bei langsamem Lauf des Motors 12 und Verwendung einer Drehzahlregelung sehr exakt geschehen muss.

Die Magnete 50, 60 sind bevorzugt in radialer Richtung magnetisiert. Die Magnetanordnung 50 kann z.B. vierpolig ausgebildet sein, und der Magnetring 60 hat bevorzugt eine höhere Zahl von Polen, um die Erfassung der Drehstellung möglichst genau zu ermöglichen.

Der Sensor 62 ist an einer Leiterplatte 66 befestigt, die ihrerseits auf der Achse 18 befestigt ist und elektronische Bauelemente des elektronisch kommutierten Außenläufermotors 12 trägt. Sie verläuft etwa senkrecht zur Drehachse 67 des Mantelteils 14. Zum Durchleiten eines Anschlusses der Leiterplatte 66 hat die Achse 18 eine axiale Bohrung 68 und eine diese schneidende radiale Bohrung 70. Die Wicklung des Motors 12 ist bei 72 angedeutet.

Zur Abdichtung der Innenseite des Trommelmotors 10 sind zwei Dichtplatten 76, 78 vorgesehen. Diese sind identisch ausgebildet, weshalb eine Beschreibung der rechten Dichtplatte 78 genügt. Diese hat auf ihrer radial inneren Seite einen Abschnitt 80, der radial nach außen federn kann und mit einem nach innen ragenden Rastwulst 82 versehen ist, der im montierten Zustand in eine zu ihm etwa komplementäre Ringnut 84 der Achse 18 eingreift.

Zur Erleichterung der Montage der Dichtplatte 76 ist die Achse 18 an einem Bereich links von der Dichtplatte 76 mit einem kegelförmigen Abschnitt 86 versehen, und zur Erleichterung der Montage der Dichtplatte 78 mit einem kegelförmigen Abschnitt 88. Dies erleichtert das Aufweiten und Aufschieben der Dichtplatten 76, 78 bei der Endmontage. Sehr vorteilhaft ist, dass sich die Dichtplatten 76, 78 nicht drehen, was die Verletzungsgefahr für den Benutzer verringert und die Reinigung des Trommelmotors 10 erleichtert. Die Dichtplatten 76, 78 können aus Metall oder einem geeigneten Kunststoff hergestellt werden.

An ihrer Außenseite ist die Dichtplatte 78 mit zwei Dichtelementen 90 versehen, z.B. zwei Dichtlippen, einem Simmerring, oder dergleichen. Die den Dichtelementen 90 gegenüber liegende Innenseite des Mantelteils 14 ist geschliffen und poliert. Zur Erleichterung der Montage sind auf der Innenseite des Mantelteils 14 im Bereich der Dichtplatten hohlkegelförmige Abschnitte 92 vorgesehen.

Im Gegensatz zu Trommelmotoren mit innerem Getriebe kann bei der Erfindung die Achse 18 durchgehend ausgebildet werden, was dem Trommelmotor 10 eine besonders hohe Stabilität verleiht. Der elektronisch kommutierte Motor 12 hat keine drehbare Achse. Als Folge der durchgehenden stationären Achse 18 genügen zwei Wälzlager 24, 40. Da das Mantelteil 14 Teil des Außenläufermotors 12 ist, reduziert sich das Gewicht des Trommelmotors 10 entsprechend.

### Montage

Die Motormagnete 50, das Distanzstück 58 und der Magnetring 60 werden in das Mantelteil 14 eingeklebt, ggf. überschliffen, und dann in einer geeigneten Vorrichtung magnetisiert. Auch wird das Wälzlager 40 in der Ausnehmung 44 montiert und durch den Sprengring 48 gesichert.

Das Stator-Biechpaket 54 wird auf die Achse 18 aufgepresst, und die Leiterplatte 66 wird auf der Achse 18 montiert. Danach wird das Kugellager 24 auf die Achse 18 an der gewünschten Stelle aufgepresst.

Nach diesen vorbereitenden Maßnahmen wird die Achse 18 mit den darauf montierten Teilen von links mit ihrem Einführungsende, also hier dem rechten Ende 94, in das präparierte Mantelteil 14 eingeschoben. Das Einschieben wird dadurch erleichtert, dass der Außenring 26 des linken Kugellagers 24 in der Ausnehmung 28 axial verschiebbar ist, um seine axiale Verspannung durch die Feder 30 zu ermöglichen.

Hierbei wird der Abschnitt 36 der Achse 18 in den Innenring 38 des Wälzlagers 40 eingepresst, und der Sensor 62 wird in das Innere des Steuermagneten 60 geschoben. Ein wichtiger Vorteil der Erfindung ist, dass die Steuerelektronik (auf der Leiterplatte 66) in den Motor 10 integriert ist.

Der Anschluss des Motors 10 nach außen erfolgt über die Querbohrung 70 und die Längsbohrung 68. Am Übergang von der Querbohrung 70 zur Längsbohrung 68 kann eine (nicht dargestellte) elektrische Steckverbindung vorgesehen werden, um die Montage zu erleichtern.

Als Sensor 62 kann man je nach Anwendung einen oder mehrere Hallgeneratoren verwenden, oder einen Resolver, einen GMR-Sensor, einen MR-Sensor, etc. Auch eine Erfassung der Rotorstellung über das sogenannte Sensorless-Prinzip ist im Rahmen der Erfindung nicht ausgeschlossen.

Anschließend wird die Feder 30 eingesetzt und durch den Krallenring 32 oder ein sonstiges Sicherungselement gespannt und gesichert. Schließlich werden die Dichtplatten 76, 78 montiert. Die Montage ist also sehr einfach und zeitsparend. Die Achse 18 kann ggf. aus mehreren Teilen zusammen gesetzt sein, doch wird ein einstückiger Aufbau bevorzugt. Bei Verwendung einer Achse großen Durchmessers und von Lagern mit kleinen radialen Abmessungen ergibt sich der Vorteil, dass über die Achse 18 eine sehr gute Wärmeabfuhr aus dem Statorblechpaket 54 möglich ist.

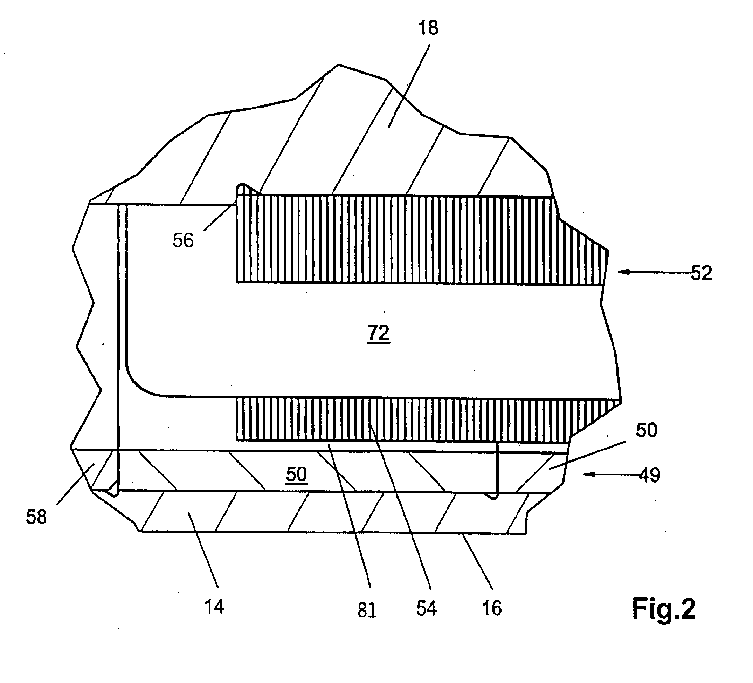

Zwischen den Rotormagneten 50 und dem Blechpaket 54 befindet sich ein Luftspalt 81 der in der Vergrößerung der **Fig. 2** dargestellt ist.

Je nach Art des verwendeten Motorprinzips können die Rotormagnete 50 eine trapezförmige oder eine sinusförmige Magnetisierung haben, wobei für die Rotormagnete 50 eine trapezförmige und für die Sensormagnete 60 eine sinusoidale Magnetisierung bevorzugt wird.

## Patentansprüche

1. Außenläufermotor, insbesondere elektronisch kommutierter Motor (12), welcher aufweiset:
Einen Innenstator (52), welcher auf einem stationären Trageteil (18) angeordnet ist; einen dem Innenstator (52) zugeordneten und relativ zu diesem verdrehbar gelagerten Außenrotor (49), welcher ein Mantelteil (14) aufweist, auf dessen Innenseite (28) eine Permanentmagnetanordnung (50) angeordnet ist, welche mit dem Innenstator (52) zusammenwirkt
welches Mantelteil (14) an einer ersten Seite auf dem stationären Trageteil (18) mittels eines ersten Wälzlagers (24) gelagert ist, dessen Außenring (26) auf der Innenseite (28) des Mantelteils (14) verschiebbar angeordnet ist, und dessen Innenring (22) mit dem Trageteil (18) fest verbunden ist;
und welches Mantelteil (14) au einer zweiten Seite auf dem stationären Trageteil (18) mittels eines zweiten Wälzlagers (40) gelagert ist, dessen Außenring (42) in der Innenseite (28) des Mantelteils (14) unverschiebbar befestigt ist und dessen Innenring . (38) mit dem Trageteil (18) fest verbunden ist, **dadurch gekennzeichnet, dass**
der Außenläufermotor so konstruiert ist, dass das Trageteil (18) mit dem auf ihm montierten Innenstator (52) und dem auf ihm montierten ersten Wälzlager (24) bei der Montage von der ersten Seite des Mantelteils (14) her in das Mantelteil (14) einführbar ist.

2. Motor nach Anspruch 1, bei welchem der Außenring (44) des zweiten Wälzlagers (46) zwischen einem auf der Innenseite des Mantelteils (14) vorgesehenen Anschlag, insbesondere einer Schulter (46), und einem dort vorgesehenen Halteglied (48), gehaltert ist.

3. Motor nach Anspruch 1 oder 2, bei welchem im Mantelteil:(14) mindestens eine Druckfeder (30) vorgesehen ist, welche den verschiebbaren Außenring (26) des ersten Wälzlagers (24) beaufschlagt.

4. Motor nach Anspruch 3, bei welchem als Widerlager für die Druckfeder (30) ein Krallenring (32) vorgesehen ist, dessen Krallen in die Innenseite (28) des Mantelteils (14) eingreifen.

5. Motor nach einem der vorhergehenden Ansprüche, bei welchem das erste Wälzlager (24) und das zweite Wälzlager (40) unterschiedlich groß sind.

6. Motor nach einem der vorhergehenden Ansprüche, bei welchem zwischen dem ersten Wälzlager (24) und dem auf dem Trageteil (18) befestigten Innenstator (52) eine Sensoranordnung (62, 66) zur Erfassung der Drehstellung des Außenrotors (49) relativ zum Innenstator (52) angeordnet ist.

7. Motor nach Anspruch 6, bei welchem der Sensoranordnung (62, 66) ein auf der Innenseite (28) des Mantelteils (14) befestigter Steuermagnet (60) zugeordnet ist, dessen Polzahl größer ist als die Zahl der mit dem Innenstator (52) zusammen wirkenden, mit dem Mantelteil (14) verbundenen Magnetpole (50) des Außenrotors (49).

8. Motor nach Anspruch 7, bei welchem zwischen den Magnetpolen (50) des Außenrotors (49) und dem Steuermagneten (60) ein nichtmagnetischer Distanzring (58) angeordnet ist.

9. Motor nach einem der vorhergehenden Ansprüche, bei welchem das Trageteil (18) mindestens bereichsweise als Teil mit kreiszylindrischem Querschnitt ausgebildet ist, auf welchem mindestens ein Verschlussglied (76, 78) befestigt ist, das an seinem Außenumfang mit wenigstens einem Dichtelement (90) gegen die Innenseite (28) des Mantelteils (14) anliegt.

10. Motor nach Anspruch 9, bei welchem das Verschlussglied (76, 78) an seinem Innenumfang einen Vorsprung (82) aufweist, welcher in eine entsprechende Ausnehmung (84) des Trageteils (18) eingreift.

11. Motor nach Anspruch 9 oder 10, bei welchem das Verschlussglied (76, 78) in seinem radial inneren Bereich einen federnden Abschnitt (80) aufweist, um seine Befestigung auf dem Trageteil (18) zu erleichtern.

12. Motor nach einem der Ansprüche 9 bis 11, bei welchem das Trageteil (18) mindestens einen kegelstumpfförmigen Abschnitt (86,88) aufweist, um das Aufschieben des Verschlussglieds (76, 78) auf das Trageteil (18) zu erleichtern.

13. Motor nach einem der Ansprüche 9 bis 12, bei welchem die Innenseite (28) des Mantelteils (18) im Bereich mindestens eines Verschlussglieds (76, 78) einen etwa hohlkegelstumpfförmigen Abschnitt (92) aufweist, um die Montage des Verschlussglieds (76, 78) im Mantelteil (14) zu erleichtern.

14. Motor nach einem der vorhergehenden Ansprüche, bei welchem das Mantelteil (14) zwecks Bildung eines magnetischen Rückschlusses für die Permanentmagnetanordnung (50, 60) des Außenrotors (49) mindestens bereichsweise aus einem ferromagnetischen Werkstoff ausgebildet ist.

## Claims

1. External rotor motor, in particular electronically commutated motor (12), which comprises:
an internal stator (52) which is arranged on a stationary carrying part (18);
an external rotor (49) which is associated with the internal stator (52) and mounted so as to be rotatable relative to the latter and which comprises a casing part (14) on the inside (28) of which is arranged a permanent magnet arrangement (50) which co-operates with the internal stator (52);
which casing part (14) is mounted on a first side on the stationary carrying part (18) by means of a first roller bearing (24) the outer ring (26) of which is arranged displaceably on the inside (28) of the casing part (14), and the internal ring (22) of which is connected rigidly to the carrying part (18);
and which casing part (14) is mounted on a second side on the stationary carrying part (18) by means of a second roller bearing (40) the outer ring (42) of which is fastened immovably in the inside (28) of the casing part (14) and the inner ring (38) of which is connected rigidly to the carrying part (18),
**characterised in that** the external rotor motor is designed so that on assembly the carrying part (18) with the internal stator (52) mounted on it and the first roller bearing (24) mounted on it can be introduced into the casing part (14) from the first side of the casing part (14).

2. Motor according to claim 1, in which the external ring (44) of the second roller bearing (46) is mounted between a stop, in particular a shoulder (46), provided on the inside of the casing part (14) and a retaining member (48) provided there.

3. Motor according to claim 1 or 2, in which at least one compression spring (30) is provided in the casing part (14), which spring acts on the displaceable external ring (26) of the first roller bearing (24).

4. Motor according to claim 3, in which a claw ring (32) is provided as the abutment for the compression spring (30), the claws of which engage in the inside (28) of the casing part (14).

5. Motor according to one of the preceding claims, in which the first roller bearing (24) and the second roller bearing (40) are of different sizes.

6. Motor according to one of the preceding claims, in which a sensor arrangement (62, 66) for detecting the rotational position of the external rotor (49) relative to the internal stator (52) is arranged between the first roller bearing (24) and the internal stator (52) fastened on the carrying part (18).

7. Motor according to claim 6, in which the sensor arrangement (62, 66) has associated therewith a control magnet (60) which is fastened on the inside (28) of the casing part (14) and the number of poles of which is greater than the number of the magnet poles (50) of the external rotor (49) connected to the casing part (14) and co-operating with the internal stator (52).

8. Motor according to claim 7, in which a non-magnetic spacer ring (58) is arranged between the magnet poles (50) of the external rotor (49) and the control magnet (60).

9. Motor according to one of the preceding claims, in which the carrying part (18) is embodied at least in areas as a part with a circular cylindrical cross-section, on which at least one blanking member (76, 78) is fastened which on its external circumference bears through at least one sealing element (90) against the inside (28) of the casing part (14).

10. Motor according to claim 9, in which the blanking member (76, 78) comprises a projection (82) which is located on its internal circumference and engages in a corresponding recess (84) of the carrying part (18).

11. Motor according to claim 9 or 10, in which the blanking member (76, 78) exhibits a resilient portion (80) in its radially inner area in order to facilitate its fastening on the carrying part (18).

12. Motor according to one of claims 9 to 11, in which the carrying part (18) comprises at least one truncated conical portion (86, 88) in order to make it easier to slide the blanking member (76, 78) on to the carrying part (18).

13. Motor according to one of claims 9 to 12, in which the inside (28) of the casing part (18) comprises an essentially hollow truncated conical portion (92) located in the area of at least one blanking member (76, 78) in order to make it easier to fit the blanking member (76, 78) in the casing part (14).

14. Motor according to one of the preceding claims, in which the casing part (14) is formed at least in areas of a ferromagnetic material for the purposes of forming a magnetic return for the permanent magnet arrangement (50, 60) of the external rotor (49).

## Revendications

1. Moteur à induit extérieur, en particulier moteur à commutation électronique (12), lequel présente :
un stator intérieur (52) qui est disposé sur une pièce porteuse stationnaire (18) ;
un rotor extérieur (49) associé au stator intérieur (52) et monté avec possibilité de rotation par rapport à celui-ci, lequel présente une pièce d'enveloppe (14) sur le côté intérieur (28) de laquelle est disposé un dispositif d'aimant permanent (50) qui coopère avec le stator intérieur (52) ;
laquelle pièce d'enveloppe (14) est montée d'un premier côté sur la pièce porteuse stationnaire (18) au moyen d'un premier palier à roulement (24) dont la bague extérieure (26) est disposée avec possibilité de déplacement sur le côté intérieur (28) de la pièce d'enveloppe (14) et dont la bague intérieure (22) est rigidement liée à la pièce porteuse (18) ;
et laquelle pièce d'enveloppe (14) est montée d'un deuxième côté sur la pièce porteuse stationnaire (18) au moyen d'un deuxième palier à roulement (40) dont la bague extérieure (42) est fixée sans possibilité de déplacement dans le côté intérieur (28) de la pièce d'enveloppe (14) et dont la bague intérieure (38) est rigidement liée à la pièce porteuse (18),
**caractérisé par le fait**
**que** le moteur à induit extérieur est construit de telle manière que la pièce porteuse (18) avec le stator intérieur (52) montée sur elle et le premier palier à roulement (24) monté sur elle peut, lors du montage, être introduite dans la pièce d'enveloppe (14) depuis le premier côté de la pièce d'enveloppe (14).

2. Moteur selon la revendication 1, dans lequel la bague extérieure (42) du deuxième palier à roulement (40) est maintenue entre une butée prévue sur le côté intérieur de la pièce d'enveloppe (14), en particulier un épaulement (46), et un élément de retenue (48) prévu à cet endroit.

3. Moteur selon la revendication 1 ou 2, dans lequel il est prévu dans la pièce d'enveloppe (14) au moins un ressort de compression (30) qui exerce une pression sur la bague extérieure (26) déplaçable du premier palier à roulement (24).

4. Moteur selon la revendication 3, dans lequel il est prévu comme contre-appui pour le ressort de compression (30) une bague à griffes (32) dont les griffes s'enfoncent dans le côté intérieur (28) de la pièce d'enveloppe (14).

5. Moteur selon l'une des revendications précédentes, dans lequel le premier palier à roulement (24) et le deuxième palier à roulement (40) sont de tailles différentes.

6. Moteur selon l'une des revendications précédentes, dans lequel un dispositif de capteur (62, 66) pour la saisie de la position de rotation du rotor extérieur (49) par rapport au stator intérieur (52) est disposé entre le premier palier à roulement (24) et le stator intérieur (52) fixé sur la pièce porteuse (18).

7. Moteur selon la revendication 6, dans lequel au dispositif de capteur (62, 66) est associé un aimant de commande (60) fixé sur le côté intérieur (28) de la pièce d'enveloppe (14) dont le nombre de pôles est plus grand que le nombre de pôles magnétiques (50) coopérant avec le stator intérieur (52), liés à la pièce d'enveloppe (14), du rotor extérieur (49).

8. Moteur selon la revendication 7, dans lequel une bague d'écartement (58) amagnétique est disposée entre les pôles magnétiques (50) du rotor extérieur (49) et l'aimant de commande (60).

9. Moteur selon l'une des revendications précédentes, dans lequel la pièce porteuse (18) est réalisée au moins en partie sous forme de pièce de section cylindrique circulaire sur laquelle est fixé au moins un élément de fermeture (76, 78) qui s'applique au niveau de sa circonférence extérieure par au moins un élément d'étanchéité (90) contre le côté intérieur (28) de la pièce d'enveloppe (14).

10. Moteur selon la revendication 9, dans lequel l'élément de fermeture (76, 78) présente sur sa circonférence intérieure une saillie (82) qui s'engage dans un évidement (84) correspondant de la pièce porteuse (18).

11. Moteur selon la revendication 9 ou 10, dans lequel l'élément de fermeture (76, 78) présente dans sa partie radialement intérieure une section (80) élastique pour faciliter sa fixation sur la pièce porteuse (18).

12. Moteur selon l'une des revendications 9 à 11, dans lequel la pièce porteuse (18) présente au moins une section (86, 88) tronconique pour faciliter l'engagement de l'élément de fermeture (76, 78) sur la pièce porteuse (18).

13. Moteur selon l'une des revendications 9 à 12, dans lequel le côté intérieur (28) de la pièce d'enveloppe (14) présente au niveau d'au moins un élément de fermeture (76, 78) une section (92) approximativement tronconique creuse pour faciliter le montage de l'élément de fermeture (76, 78) dans la pièce d'enveloppe (14).

14. Moteur selon l'une des revendications précédentes, dans lequel la pièce d'enveloppe (14) est réalisée en moins en partie dans un matériau ferromagnétique dans le but de former une dérivation magnétique pour le dispositif d'aimant permanent (50, 60) du rotor extérieur (49).
